# EUROPÄISCHE PATENTSCHRIFT

(11) **EP 1 163 191 B1**
(45) Veröffentlichungstag und Bekanntmachung des Hinweises auf die Patenterteilung: **26.06.2002**
(21) Anmeldenummer: 00954409.9
(22) Anmeldetag: 31.03.2000
(51) Int. Cl.: C02F 1/52, C02F 1/70

(54) **VERFAHREN ZUR KONDITIONIERUNG VON MIT HALOGENKOHLENWASSERSTOFFEN BELASTETEN WÄSSERN**
METHOD FOR CONDITIONING WATER CONTAMINATED WITH HALOGENATED HYDROCARBONS
PROCEDE DE TRAITEMENT D'EAUX POLLUEES PAR DES HYDROCARBURES HALOGENES

(30) Priorität: 31.03.1999 DE 19916396
(43) Veröffentlichungstag der Anmeldung: 19.12.2001
(73) Patentinhaber: UFZ-UMWELTFORSCHUNGSZENTRUM Leipzig-Halle GmbH, 04318 Leipzig (DE)
(72) Erfinder: WEISS, Holger Dr., D-04457 Bahlsdorf (DE); DAHMKE, Andreas, D-24306 Plön (DE)
(74) Vertreter: Ziebig, Marlene, Dr. Dipl.-Chem.
(86) Internationale Anmeldenummer: EP0002861
(87) Internationale Veröffentlichungsnummer: WO0063125

(56) Entgegenhaltungen:
- WO-A-98/21149
- CA-A- 2 079 282
- US-A- 4 219 419

## Beschreibung

Die Erfindung betrifft ein Verfahren zur in situ-Konditionierung von mit Halogenkohlenwasserstoffen, insbesondere Chlorkohlenwasserstoffen (CKW) belasteten Wässern, insbesondere Grundwässern, indem den Wässern elementare Metallgranulate oder deren Gemische im Gemisch mit einem oder mehreren Kohlenstoff enthaltenden organischen Materialien zugesetzt werden. Das Verfahren ermöglicht und stimuliert den nachfolgenden biotischen oder abiotischen Abbau.

In CA-A-2 079 282 ist unter anderem ein Verfahren zur Dehalogenierung von mit Halogenkohlenwasserstoffen belasteten Wässern beschrieben, bei dem elementare Metallgranulate und ein Kohlenstoff enthaltendes organisches Material zugesetzt werden. Das Verfahren findet in der Regel im on-site Fest- oder Mischbett-Bioreaktor statt und beruht auf dem mikrobiologischen Abbau der Schadstoffe unter optimierten Bedingungen für das Wachstum der Mikroorganismen (z.B. bei bevorzugter Temperatur von 25-37°C und Anwendung eines Aufwachssubstrates mit möglichst großer Oberfläche).

Andererseits ist bekannt, daß für verschiedene Technologien zur in situ-Sanierung von mit Halogenkohlenwasserstoffen belasteten Grundwässern Bedarf an Wasserstoff besteht. Beispiele hierfür sind die mikrobielle Reduktion sowie die Hydrogenierung mit Hilfe palladisierter Zeolithe. Wie sich gezeigt hat, können CKW-Abbauraten durch Zuführung von Wasserstoff zu natürlichen Grundwässern gesteigert werden. Die Wasserstoffzufuhr kann durch Einleiten von Wasserstoffgas, das Einbringen von Wasserstoff freisetzenden Stoffen (Hydrogen Releasing Compounds) oder durch elektrolytische in situ-Erzeugung von Wasserstoff erfolgen.

Zwar werden bei den genannten Methoden durch Zuführung von Wasserstoff verbesserte Abbauraten erzielt, aber gelöste Stoffe wie z. B. Sauerstoff, Sulfid, Phosphat, Nitrat, Sulfat, Carbonat oder Silikat oder auch Schwermetalle können einzeln oder in ihrer Gesamtheit beim nachfolgenden natürlichen mikrobiellen Abbau oder bei der nachfolgenden Sanierung durch bekannte in situ-Technologien inhibierend wirken, so daß die Abbaubedingungen bei den bekannten Verfahren des Standes der Technik noch nicht voll befriedigend sind.

Es war deshalb die Aufgabe der Erfindung, ein Konditionierungsverfahren für mit Halgenkohlenwasserstoffen belastete Wässer bereitzustellen, mit dem die Wässer effizient und langfristig wirksam konditioniert werden können, so daß für den nachfolgenden natürlichen mikrobiellen Abbauprozeß oder bei einer nachfolgenden in-situ-Sanierung gute Abbaubedingungen gewährleistet sind. Insbesondere soll das Konditionierungsverfahren auch einen verbesserten Abbau anorganischer Schadstoffe gewährleisten.

Die Aufgabe der Erfindung wird durch die Merkmale des Anspruchs 1 gelöst, Erfindungsgemäß wird so in situ Wasserstoff erzeugt und kurzkettige, zum Teil ungesättigte, Kohlenwasserstoffe (beispielsweise Ethan oder Ethen) generiert, die als Cosubstrate den mikrobiellen Abbau der Halogenkohlenwasserstoffe stimulieren oder teilweise auch erst ermöglichen. Gleichzeitig werden möglicherweise vorhandene Schwermetalle durch das organische Material sorbiert und bestimmte anorganische Verbindungen wie z.B. Sulfide durch die zugesetzten Metalle ausgefällt.

Durch das erfindungsgemäße Konditionierungsverfahren werden vor allem auch optimale pH- und E_{H}-Verhältnisse geschaffen, die für den weiteren mikrobiologischen Abbau wichtig sind.

Erfindungsgemäß finden als Metalle bevorzugt Eisen-, Aluminium-, Silber- oder Zinkschüttungen oder deren Gemische Verwendung.

Als erfindungsgemäß ganz besonders geeignet hat sich elementares granuliertes Eisen mit Schüttdichten von 1,4 g/cm³ bis 3,5 g/cm³, einer Porosität von 50 bis 70% und einer spezifischen Oberfläche von 0,3 bis 0,8 m²/g erwiesen. Diese Eisensorten sind kommerziell erhältlich. Erfindungsgemäß bevorzugt betragen die Schüttdichten von 1,8-3,0 g/cm³ und ganz besonders bevorzugt von 1,9 bis 2,9 g/cm³. In einer ganz besonders bevorzugten Ausführungsform der Erfindung wird Eisengranulat einer Schüttdichte von 1,9 bis 2,9 g/cm³, einer Porosität von 55-66% und einer spezifischen Oberfläche von 0,5-0,63 m²/g eingesetzt. Werden die genannten Eisensorten oder Gemische mit diesen Eisensorten, z. B. Eisen-Aluminium-, Eisen-Zink- oder Eisen-Silber-Gemische, eingesetzt, so ist im Zuge der H₂O-Reduktion sowie den damit unmittelbar und mittelbar im Zusammenhang stehenden Mineralfällungs- und Sorptionsprozessen eine besonders optimale Konditionierung des kontaminierten Grundwassers für die nachfolgende Behandlung mit abiotischen und/oder mikrobiellen Verfahren gegeben.

Aufgrund der Abhängigkeit der Wasserstoffentwicklung vom pH-Wert des Grundwassers und den darin gelösten Komponenten ist erfindungsgemäß eine besonders hohe Wasserstoffentwicklung bei niedrigen pH-Werten und hohen HCO₃⁻ -Gehalten zu verzeichnen.

Die Wasserstoffentwicklung ist zwar bei niedrigen pH-Werten besonders effektiv, aber nicht darauf beschränkt. Auch bei neutralen und sogar basischen pH-Werten werden gute Ergebnisse erzielt. Das erfindungsgemäße Verfahren ist deshalb auch für Grundwässer mit einem komplexen anorganischen und organischen Lösungsinventar geeignet. Die erfindungsgemäße in-situ-Konditionierung des kontaminierten Grundwassers durch H₂-Anreicherung, pH-Wert-Regulierung, Erniedrigung des E_{H}-Wertes auf Werte kleiner -200 mV, Verringerung der Konzentrationen von Oxidationsmitteln wie Sauerstoff oder Nitrat und Anionen wie Sulfid, Karbonat und Spurenmetallen durch eintretende Fällungs- und Sorptionsprozesse ist gegenüber den Verfahren des Standes der Technik breiter anwendbar, kostengünstiger und sicherheitstechnisch unbedenklich.

Das erfindungsgemäße Verfahren ist insbesondere auch für Wässer mit komplexen Kontaminationen aus chlorierten Aliphaten, chlorierten Aromaten und anorganischen Schadstoffen wie. z.B. Nitrat vorteilhaft anwendbar, da durch das erfindungsgemäße Verfahren die potentiellen Inhibierungsreaktionen weitgehend minimiert und damit der nachfolgende mikrobielle und/oder abiotische Abbau der organischen und anorganischen Schadstoffe verbessert wird.

Erfindungsgemäß werden als Kohlenstoff enthaltende Materialien Aktivkohle oder biologische Materialien eingesetzt. Als biologische Materialien kommen vorzugsweise pflanzliche Materialien wie z.B. zerkleinertes Holz, Stroh oder Blattstreu oder ähnliches in Frage. Erfindungsgemäß von Wichtigkeit ist, daß diese Materialien als mögliche Kohlenstoffquelle für einen nachfolgenden mikrobiologischen Abbau, als schwaches Oxidationsmittel gegenüber den Metallen und als Sorbens für mögliche toxische Schwermetallionen dienen können.

Das Mischungsverhältnis Metallgranulat zu organischem Material hängt von den Belastungen des zu konditionierenden Wassers und von den erfindungsgemäß eingesetzten Metallen und biologischen Materialien ab. In der Regel hat sich ein Volumenverhältnis Metallgranulat : organischem Material von 0,25:1 bis 3:1 als günstig erwiesen. Bevorzugt beträgt das Volumenverhältnis 1:1. Das für den jeweiligen Fall geeignete Mischungsverhältnis läßt sich durch Säulenversuche mit Standortwasser leicht ermitteln.

Für die Feldanwendung des erfindungsgemäßen Verfahrens zur Grundwassersanierung können die beschriebenen Metallgranulate und organischen Materialien in gut permeable Behältnisse, z.B. Säcke aus Geotextilien, eingebracht und so tiefenspezifisch in Grundwassermessstellen eingebracht werden. Aufgrund der unterschiedlichen Körnung der eingesetzten Materialien kann dabei die Durchlässigkeit so auf die Durchlässigkeit des Aquifers angepasst werden, dass eine optimale Durchströmung und damit tiefenspezifische Konditionierung des Grundwassers erreicht wird. Wenn ein größeres Volumen des Grundwassers entsprechend konditioniert werden soll, können die erfindungsgemäßen Materialien auch in Gräben eingebracht werden, die durch übliche Verfahren der Tiefbautechnik in der wassergesättigten und ungesättigten Zone erzeugt werden können. Zur Vermeidung von Entmischungen während des Schüttvorgangs sind permeable Gebinde zu verwenden oder andere geignete Maßnahmen zu treffen.

### Ausführungsbeispiel:

### Beispiel 1:

Untersuchung der H₂-Gasentwicklung von ausgewählten Eisensorten

**Tab.:**

| Kenndaten der Reaktionsräume ausgewählter Eisensorten und gemessene H₂-Gasentwicklung bei einer Abstandsgeschwindigkeit von 30 cm/d mit demineralisiertem Wasser | | | |
|---|---|---|---|
| | **Fe**^{**0**}**-Sorte A** | **Fe**^{**0**}**-Sorte B** | **Fe**^{**0**}**-Sorte C** |
| Porosität [%] | 38 | 55 | 66 |
| Schüttdichte [g/cm³] | 4,6 | 2,9 | 1,9 |
| Spez. Oberfläche [m²/g] | 0,043 | 0,5 | 0,63 |
| H₂-Gasentwicklung [mmol/d] bei pH 4 | 0,56 | 3,9 | 3,57 |

### Beispiel 2:

### Konditionierung eines kontaminierten Grundwassers (PCE, TCE und Nitrat) mittels Generierung von H₂ und kurzkettigen Kohlenwasserstoffen durch ein Gemisch aus elementarem Eisen (50 Volumen-%, Eisensorte B, siehe Tabelle in Beispiel 1) A-Kohle (20 Volumen-%);

### Holzspänen (15 Volumen-%) und Blattstreu (15 Volumen-%) für mikrobielle Abbauprozesse

Das oben angebene Gemisch wurde in einem Säulenversuch (30 cm Länge; Durchmesser 10 cm) einer mit Aquifermaterial gefüllten Säule (100 cm Länge; 10 cm Durchmesser) vorgeschaltet und mit kontaminiertem Standortwasser (PCE 3 mg/l, TCE 5 mg/l und Nitrat 120 mg/l, pH 6,4; E_{H} +300 mV) durchströmt. Nach kurzer Zeit konnte die oben beschriebene Konditionierung des Standortwassers mit Wasserstoffkonzentrationen um 0,5 bis 1 mg/l, Alkankonzentrationen von 2-3 mg/l, einem pH-Wert von 9 und einem E_{H}-Wert von -250 bis -300 mV gemessen werden. Diese Konditionierung führte dazu, daß auch nach Durchbruch der Kontaminanten durch die Konditionierungssäule langfristig ein weiterer mikrobieller Abbau der oben genannten Schadstoff in der Aquifersäule erreicht wurde. In einem Vergleichsversuch mit Aquifermaterial ohne vorgeschaltete Konditionierungseinheit konnte kein Abbau der Schadstoffe festgestellt werden.

### Beispiel 3:

### Fällung von Sulfiden aus dem Grundwasser mittels eines erfindungsgemäßen Gemisches, das elementares Eisen und elementares Silber enthält

In einem Säulenversuch (Länge 1m; Durchmesser: 10 cm) wurde das oben genannte Gemisch (Fe 99,5 Gew.-%; Ag 0,5 Gew.-.%)mit einem Sulfid-haltigen Standortwasser (0,5 mg/l) durchströmt. Nach der Passage des Grundwassers durch die Säule verringerte sich die Sulfidkonzentration langfristig auf Werte unterhalb der analytischen Nachweisgrenze.

Die Versuche weisen darauf hin, daß durch das Einbringen eines erfindungsgemäßen Gemisches in die gesättigte Zone die Sulfidkonzentration im Grundwasser langfristig so konditioniert werden kann, dass Vergiftungserscheinungen bei in situ-Sanierungstechnologien, wie z.B. die Vergiftung von Pd-Katalysatoren, verhindert oder entscheidend zeitlich verzögert werden können.

## Patentansprüche

1. Verfahren zur Konditionierung von mit Halogenkohlenwasserstoffen belasteten Wässern,
**dadurch gekennzeichnet, daß**
den Wässern *in situ* elementare Eisengranulate einer Porosität von 50 bis 70%, einer Schüttdichte von 1,4 bis 3,5 g/cm³ und einer spezifischen Oberfläche von 0,3 bis 0,8 m²/g im Gemisch mit Aktivkohle und/oder einem oder mehreren Kohlenstoff enthaltenden organischen Materialien zugesetzt werden.

2. Verfahren nach Anspruch 1,
**dadurch gekennzeichnet, daß**
das Volumenverbältnis Granulat zu organischem Material von 0,25:1 bis 3:1 beträgt, vorzugsweise 1:1.

3. Verfahren nach einem der Ansprüche 1 bis 2,
**dadurch gekennzeichnet, daß**
als Kohlenstoff enthaltendes organisches Material biologische Materialien, insbesondere pflanzliche Materialien, verwendet werden.

## Claims

1. A process for the conditioning of waters polluted with halogenated hydrocarbons,
**characterized in that**
the waters are added *in situ* with elemental iron granulates having a porosity of from 50 to 70%, a bulk density of from 1.4 to 3.5 g/cm³, and a specific surface area of from 0.3 to 0.8 m²/g in admixture with active charcoal and/or one or more organic materials including carbon.

2. The process according to claim 1,
**characterized in that**
the volume ratio of granulate and organic material is from 0.25:1 to 3:1, and preferably 1:1.

3. The process according to any of claims 1 to 2,
**characterized in that**
biological materials, particularly vegetable materials are used as organic materials including carbon.

## Revendications

1. Procédé de conditionnement d'eaux polluées par des hydrocarbures halogénés,
**caractérisé en ce que**
l'on ajoute dans les eaux *in situ* des granulés de fer élémentaire d'une porosité de 50 à 70 %, d'une densité en vrac de 1,4 à 3,5 g/cm³ et d'une surface spécifique de 0,3 à 0,8 m²/g mélangées à du charbon actif et/ou à une ou plusieurs matières organiques contenant du carbone.

2. Procédé selon la revendication 1,
**caractérisé en ce que**
le rapport volumique des granulés à la matière organique est de 0,25 :1 à 3 :1, de préférence de 1 :1.

3. Procédé selon une des revendications de 1 à 2,
**caractérisé en ce**
**qu'**en tant que matière organique contenant du carbone, l'on utilise des substances biologiques, en particulier des substances végétales.
